# EUROPEAN PATENT APPLICATION

(11) **EP 2 455 351 A1**
(43) Date of publication of application: **23.05.2012**
(21) Application number: 10191952.0
(22) Date of filing: 19.11.2010
(51) Int. Cl.: C04B 33/132, C02F 1/28, C04B 38/00, C04B 18/02, B01J 20/04, B01J 20/06, B01J 20/08, B01J 20/10, B01J 20/28, C04B 35/195, C04B 35/20, C04B 33/32

(54) **Method of manufacturing porous ceramic pellets for phosphorous removal**

(71) Applicant: Phosbox Technologies Limited, County Roscommon (IE)
(72) Inventor: Connaughton, Noel, County Roscommon (IE); Nally, Dermot, County Westmeath (IE); Wood, Jamie, County Sligo (IE)
(74) Representative: Schütte, Gearoid

(57) **Abstract**

A method for processing fines materials generated as a by-product from the screening and washing of sand includes the steps of drying, pelletising and firing the fines materials to produce a ceramic material in the form of porous pellets which have enhanced phosphorous removal properties particularly useful in the removal of phosphorous from waste water.

## Description

### Field of the Invention

The present invention relates to a method of treating water to remove phosphorus and other contaminants using a waste by-product produced during the processing of sand and gravel. More particularly, the invention relates to a method of processing this waste by-product to improve its physical and chemical characteristics and a method of incorporating the product into a simple and easy to use system for the treatment of water and waste water.

### Background

Phosphorus, together with nitrogen, is often the limiting nutrient for primary production in fresh water systems such as lakes, rivers and streams and in some instances, in sea estuaries. While phosphorus is not directly toxic to aquatic organisms, phosphorus can cause the excessive growth of algal blooms in water. These algal blooms can be unsightly, interfere with the beneficial use of the water and when the algae decay, this can lead to oxygen depletion in the water which can cause fish kills. In addition, some algae are toxic. Ideally, phosphorus concentrations in natural waters should be below about 0.03mg/l to avoid problems with algal blooms.

Untreated waste water usually contains, among other contaminants, nutrients, mainly nitrogen and phosphorus. It has been estimated that urban residents discharge about 2 - 3g P per capita per day in waste water (including contributions of P in household detergents). Where there is little or no contribution to the phosphorus load from detergents, the daily P load per capita is in the region of 1.5 - 2g P per day. The concentration of phosphorus in the untreated waste water at the inlet to a waste water treatment plant is highly variable and depends on the quantity of water used by the community and the amount of additional rainwater and groundwater infiltration into the sewerage network. Typical phosphorus concentrations range from about 3 - 12mg/l. At conventional waste water treatment plants, the main focus of attention to date has been the removal of organic matter and suspended solids and if no specific measures are taken to remove phosphorus, the phosphorus concentration in the waste water is only marginally reduced, reflecting the phosphorus requirements of the biomass generated in the biological treatment stage. Furthermore, some waste water treatment plants incorporate regional sludge treatment facilities to treat imported sludge to the facility and this may result in an increased phosphorus load to the waste water treatment plant.

An increasing number of waste water treatment plants are legally required to incorporate phosphorus removal technologies and strict limits are being set on the maximum phosphorus concentration in the treated effluent. In Europe, under the requirements of the Urban Waste Water Treatment Directive, there is a requirement to remove at least 80% of the phosphorus where the treated waste water is discharged to designated sensitive waters. Furthermore, for waste water treatment plants with a population equivalent up to 100,000, the maximum phosphorus concentration must not exceed 2mg/l, and this limit is reduced to 1mg/l for waste water treatment plants with a population equivalent exceeding 100,000.

With the introduction of the European Water Framework Directive (WFD), a much more stringent approach is being adopted in relation to phosphorus. The WFD requires that regulatory authorities ensure that when issuing licences or permits for the discharge of treated waste water, the assimilative capacity of the receiving water must be assessed and the discharge must not prevent the receiving water achieving "good quality" status by December 2015. The implementation of the WFD has resulted in a dramatic reduction in the allowable concentration of phosphorus in a much wider range of waste water treatment plants, including relatively small plants. The allowable phosphorus concentration is now based on an in-depth case by case study with the available dilution and the background phosphorus concentration in the receiving water now being important factors. The outcome from all of this is that many waste water treatment plants are now being issued with phosphorus limits varying from as low as 0.1 - 2mg/l and in many instances, the conventional technologies currently available will not be able to achieve these low limits and/or additional processes such as tertiary filtration will be required.

In addition to the release of phosphorus from municipal waste water treatment plants, housing, community, commercial and industrial activities in many rural areas generate waste water that must be treated in septic tanks and/or proprietary waste water treatment systems. Many of these systems discharge partially treated waste water directly into the ground through soil percolation areas, contributing significantly to the levels of phosphorus released to groundwater. While phosphorus is not normally an immediate threat to groundwater, in many areas, groundwater is a significant contributor to surface waters, thereby necessitating phosphorus removal from the waste waters from these rural activities.

A number of methodologies have traditionally been used to remove phosphorus from municipal waste water treatment plants. These include the following:

| **Conventional Phosphorus Removal Systems** | **Disadvantages** | |
|---|---|---|
| **Metal salt (aluminium oriron) addition** | ■ | Bunded storage facilities required for acidic chemicals |
| | ■ | Emergency eye-wash shower required |
| | ■ | Accurate chemical dosing and flow monitoring required |
| | ■ | Can interfere with or inhibit the biological processes used in conventional treatment systems to remove organic matter |
| | ■ | Typically lowers the pH and may require addition of alkali to neutralise the pH |
| | ■ | Significantly increases the quantity of sludge generated which in turn increases both the capital and operating costs |
| **Lime** | ■ | Costly storage facilities required |
| | ■ | Accurate chemical dosing and flow monitoring required |
| | ■ | Increases the pH and requires addition of acid to neutralise the pH |
| | ■ | Very significantly increases the quantity of sludge generated which in turn increases both the capital and operating costs |
| **Biological** **Phosphorus** **Removal** | ■ | Requires numerous inter-dependent processes that must be coordinated |
| | ■ | Requires high degree of control on influent characteristics |
| | ■ | Large footprint compared to chemical systems |
| | ■ | Sludge contains high concentrations of phosphorus which may be released back into the main flow following dewatering of digested sludge |
| | ■ | Phosphorus ultimately removed from a side-stream using chemicals |

Single households traditionally have had to rely upon low-cost small-scale waste water treatment systems such as septic tanks. Sorption of phosphorus to the percolation area substratum within these systems has been recognised as one of the most important P removal mechanisms in one-off housing (Richardson, C. J. (1985), Mechanisms controlling phosphorus retention capacity in freshwater wetlands. Science, 228, 1422-1427).

Traditionally, locally available materials such as sand and soils have been used for P-removal. In many cases, these substrates have been used without any knowledge of the P-retaining capacities, even though some recent studies have aimed at investigating the P-sorption capacity of different materials (C. A. Arias, M. del Bubba and H. Brix, 2001, Phosphorus Removal by Sands for Use as Media in Subsurface Flow Constructed Reed Beds. Department of Plant Ecology, University of Aarhus, Nordlandsvej 68, dk-8240 Risskov, Denmark).

In recent years, research has been directed to a selection of substrates for phosphorus removal due to the fact that the P-sorbing capacity of the substratum is a crucial parameter for P-removal in many systems (Drizo, A., Comeau, Y., Forget, C. and Chapuis, R.P., 2002, Phosphorus saturation potential - A parameter for estimating the longevity of constructed wetlands systems. Environ. Sci. Tech., 36(21), 4642-4648).

Since the sorption, e.g. adsorption and/or precipitation mechanisms is a finite process, it is an important factor to consider when selecting substrates for potential use as a substratum, in a P filter for use in a constructed wetland system or in other small scale waste water treatment systems. Other reasons for searching for alternative substrates are that local substrates are not always available at a reasonable cost (Geohring, L.D., T.S. Steenhuis, N. Corrigan, M. Ries, M. Cohen, K. Cabral, R. Stas, R. De, J. H. Peverly., 1995, Specialized substrates for phosphorus removal with constructed wetlands. In: Proceedings, Versatility of Wetlands in the Agricultural Landscape Conference. Tampa FL. September 1995; Sakadevan, K. and Bavor, H. J.,1998, Phosphate Adsorption Characteristics of Soils, Slags and Zeolite to be Used As Substrates in Constructed Wetland Systems. Water Research Vol. 32, No. 2: 393-399). This research has been extended to cover a wide variety of potential substrates which have potential to remove phosphorus from waste water in both municipal and small scale systems and which also have application in phosphorus removal from industrial waste streams. Some of the reported materials include minerals and rocks, soils, marine sediments, industrial by-products from the steel and mining industries and man-made products (Johansson, L. & Gustafsson, J P., Phosphate removal using blast furnace slags and opoka-mechanisms, Water Res. 34 (2000) 259-265). More recently, significant moves have been made towards developing new P removal technology which reduces the generation of sludge, selectively adsorb/absorb or precipitate P out of a waste water stream and which do not require large infrastructure or capital investment to produce, use and install. In particular, investigation has focused on the use of clay, bauxite, fly ash, red mud and volcanic ash.

Phosphorus is a scarce natural resource, vital for the health and growth of man, animals, and all plants, but particularly important in the growth of agricultural crops. Unlike fossil fuels, phosphorus cannot be replaced by other resources but is a unique essential component of life.

Traditional agricultural systems made significant efforts to ensure that phosphorus was recycled back to land to ensure productivity. Animal manures were returned to land, as were human wastes and ash from burning wood or other biomass fuels. With the move towards living in urban areas, the importance of conserving and reusing this precious non-renewable resource has been neglected. Modern living practices have resulted in hundreds of thousands of tonnes of phosphorus being removed from the phosphorus cycle annually as human and animal wastes are discharged to rivers and the sea in partially treated sewage, or landfilled or incinerated in sewage sludges.

As a result of the removal of phosphorus from the agricultural system, modern agricultural production depends on inputs of mineral phosphorus to maintain its phosphorus balance. This mineral phosphorus is delivered in the form of fertiliser, most commonly manufactured from virgin phosphorus rock. Research shows that current consumption will result in the depletion of the reserves of low contaminated phosphate ores within the next one hundred years at current exploitation rates. It is therefore vital in the long-term for sustainable agricultural development to reestablish systems of phosphorus recycling and to find alternative sources of phosphorus for the production of high grade agricultural fertilisers.

Facing this depletion in virgin sources of phosphorus in the near future, the objective of all industrialised countries should be the sustainable use of available phosphorus sinks. Municipal waste water treatment plants and phosphorus-rich industrial process waters serve as major sinks for phosphate and therefore have the potential to offer a valuable replacement for phosphate ore, should they be utilised as a phosphorus stock rather than a potential environmental hazard to be treated. Phosphorus recovery straight from the liquid phase offers a noteworthy advantage over phosphorus recovery from sludge, in that phosphate is already dissolved and just has to be scavenged from the waste water stream.

To establish a sustainable phosphorus removal system that is suitable in dealing with real waste water at a full-scale treatment plant, the process must be able to demonstrate numerous attributes and the absence of one or more of these attributes will render the system non-viable on technical, environmental and/or economic grounds. The ideal phosphorus removal media should comply with the following criteria:
1. The process must be capable of treating real waste water rather than small synthetic samples in a laboratory
2. The process must be capable of reducing typical phosphorus concentrations in waste water to the levels required in the licence conditions now being imposed internationally (e.g. greater than 80% removal and with a residual P concentration typically in the region of 0.5 - 2mg/l, depending on the sensitivity of the receiving water)
3. The media must not contain hazardous materials in such concentrations that some of these materials are released into the treated waste water above the safe/allowable limits
4. The media must be sufficiently porous and permeable to allow waste water to pass through at a reasonable rate without getting clogged
5. The media must be sufficiently robust (e.g. hard and free of excessive dust) that the media will not disintegrate over its expected useful life
6. The media must have sufficient phosphorus sorption capacity that the media can continue to perform at the required performance level for many years. This allows the use of reasonably small quantities of material and ensures that the process is cost effective
7. The media must not generate large volumes of additional waste sludges or chemical regeneration streams that negate the advantage of using such systems in the first instance. It should be noted that the cost of treating and disposing of the additional chemical sludge generated by conventional chemical precipitation of phosphorus from waste water accounts for a very large portion of the overall cost and can exceed the cost of the treatment chemicals by a factor of five
8. At the end of the useful life of the media, it must be able to release the trapped phosphorus so that the phosphorus can be effectively recovered for reuse in agriculture or in an industrial process
9. The system must be able to cope with the varying conditions encountered at a real waste water treatment plant such as variations in flowrate and chemical characteristics without the need for very sophisticated and expensive control systems
10. The overall capital and operating costs of the system must be competitive with existing technologies so that municipalities and the public can afford to use these new technologies.

The present invention is directed to addressing at least some of these problems.

### Summary of the Invention

According to the invention there is provided a method for the processing of fines materials generated as a by-product from the screening and washing of sand and gravel comprising the steps of drying, pelletising and firing the fines material to produce a ceramic material in the form of pellets with enhanced phosphorus removal properties.

In one embodiment of the invention the ceramic material pellets have enhanced hydraulic conductivity and reduced bulk density compared to the fines materials.

In another embodiment the pellets have a diameter of 0.5mm to 30mm.

In another embodiment the ceramic material has the following physical and chemical properties

| **Parameter** | **Typical Value** |
|---|---|
| Average Particle Size | 0.5 - 20 mm |
| Loose Bulk Density | 700₋-1200 Mg/m³ |
| Hydraulic Conductivity | 3-5 x 10⁻² m/s |
| Water Absorption | 30 - 50% by weight |
| SiO₂ | 20 - 60% by weight |
| CaO | 25 - 75% by weight |
| Al₂O₃ | 1 - 20 % by weight |
| Fe₂O₃ | 1 - 20 % by weight |

In another embodiment the firing step takes place at a temperature of between 600°C - 1200°C, preferably between 1000°C and 1200°C, more preferably between 1050°C and 1150°C.

In another embodiment the pellets remove phosphorus from water to an order of approximately 150 - 200g P/kg of ceramic material.

In another embodiment the pellets are solid and retain their shape and durability when submerged for long periods in water.

In another aspect the invention provides a method of removing phosphorus from water comprising contacting the water to be treated with the pellets produced according to the method described herein to remove phosphorus from the water to the order of approximately 150 - 200g P/kg of pellets.

In another embodiment the pellets are placed in a container and the water to be treated flows through the pellets in the container in an upflow, downflow and/or horizontal flow mode.

In another embodiment the pellets are held in suspension by the flow of liquid in the container or by a mixing process to allow sufficient contact time between the ceramic material pellets and the water to remove the phosphorus from the water.

In another embodiment the phosphorus is retained by the pellets and does not re-dissolve back into the water.

In another aspect the invention provides a method for recycling phosphorous contained within the pellets produced according to the method of the invention described herein, wherein the retained phosphorus is recovered as a liquid by flushing with water that does not contain phosphorus or by other means or as a solid fertilizer, soil conditioner or source of recovered or recycled phosphorus for commercial or industrial use.

In a further aspect the invention provides a method for the combined removal of one or more of phosphorus, suspended solids, suspended organic matter, ammonia and pathogens from water comprising the use of the pellets produced by the method described herein.

In a still further aspect the invention provides a method for the neutralisation of acidic wastes, such as acid mine drainage, comprising the use of the pellets produced by the method described herein.

In another aspect the invention provides a method for pH correction in water and waste water treatment comprising the use of the pellets produced by the method of the invention described herein.

### Brief Description of the Drawings

The present invention will now be described with respect to the following nonlimiting examples and figures, in which:
Figure 1: Equilibrium Phosphorus Concentration vs. Mass of Media Used
Figure 2: Mass of Phosphorus Retained by Media vs. Mass of Media Used
Figure 3: Effect of Mass of Media Used on Phosphorus Removal Rate
Figure 4: Effect of Media Particle Size on Phosphorus Removal and Sorption
Figure 5: Efficiency of Phosphorus Removal using Raw Material and Processed Media
Figure 6: Concentration of Phosphorus after 8 days contact with Unprocessed Aggregate Fines (Initial Phosphorus Conc. = 1895 mg/l)
Figure 7: Phosphorus Removal Efficiency using Raw Fines Material from various Geological Formations around Ireland
Figure 8: Concentration of Phosphorus after contact and settlement with various types and quantities of media
Figure 9: Percentage Phosphorus Removal versus Cumulative Flow for Influent Concentrations from 1000mg/l to 38625mg/l
Figure 10: Percentage Phosphorus Removal versus Cumulative Flow for Influent Concentrations from 5mg/l to 1000mg/l
Figure 11: Cumulative Phosphorus Removal per kg of Media versus Cumulative Flow for Influent P Concentrations from 1000mg/l to 38625mg/l
Figure 12: Cumulative Phosphorus Removal per kg of Media versus Cumulative Flow for Concentrations from 5mg/l to 1000mg/l
Figure 13: Concentration of Phosphorus using two different types of media and with varying contact times
Figure 14: Concentration of Phosphorus after contact with media processed at 1200°C and with varying flow rates
Figure 15: Concentration of Phosphorus after contact with media processed at 1100°C and with varying flow rates

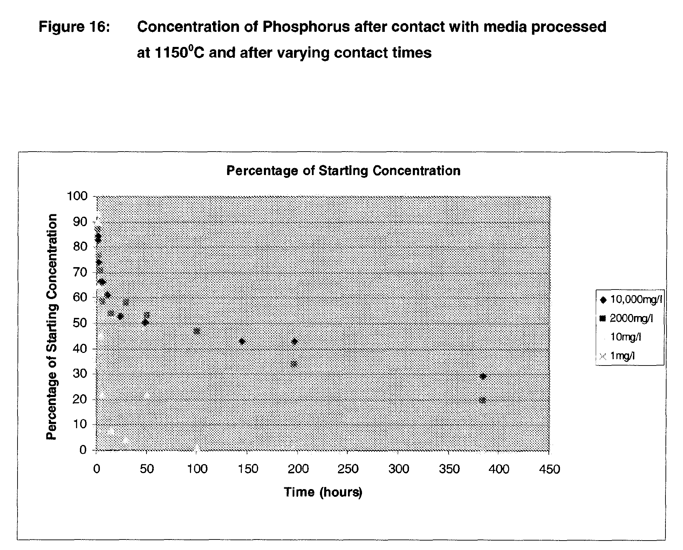

Figure 16: Concentration of Phosphorus after contact with media processed at 1150°C and after varying contact times.

### Detailed Description of the Invention

In this specification, the term "raw material" will be understood to relate to the fines material generated as a by-product from the screening and washing of sand and gravel.

In this specification, the term "processed material" refers to the processed raw material having undergone the drying, pelletising and firing the fines material to produce a ceramic material in the form of pellets. The "processed material" may also be referred to as "media"/"processed media" or "pellets"/"processed pellets".

In this specification, the term "water" covers water with phosphorus or other undesirable contaminants, including waste water and water with effluent.

One of the objectives of the present invention is to provide a processed material that is free from the disadvantages of conventional techniques for phosphorus removal and which can be effectively used in a simple process at both large and small scale facilities to remove phosphorus from a variety of waste water streams.

Advantageously, the present invention proposes to accomplish these aims by utilising a material which is currently a waste by-product requiring disposal.

Specifically, the invention involves drying, pelletising and firing waste mineral fines to produce a media or processed material which has the characteristics of high durability, excellent hydraulic conductivity and porosity and most importantly, an ability to selectively remove a very high percentage of phosphorus from waste water streams, across a broad range of pH and influent phosphorus concentrations and with an ability to continue to perform at these high levels for many years.

Advantageously, the processed material sorbed phosphorus is useful as a raw material in commercial or industrial processes as an alternative to the use of virgin raw material and also has potential for use directly as a phosphorus fertilizer. Thus, the phosphorus may be recycled.

Tables 1 and 2 below set out some of the significant general characteristics of the raw and processed material respectively.

**Table 1: Characteristics of Raw Material**

| **Parameter** | **Dimensions** | **Typical Value** |
|---|---|---|
| Particle Size | Mm | 100% less than 0.063mm |
| Bulk Density | Mg/m³ | 1400-1600 |
| Hydraulic Conductivity | m/s | 10⁻⁶-10⁻⁸ |
| Hydraulic Conductivity | m/day | 0.000864 - 0.0864 |
| Calcite | % by weight | 47-50 |
| Quartz | % by weight | 26-30 |
| IIlite/Muscovite | % by weight | 8-11 |
| Plagioclase | % by weight | 4-5 |
| Kaolinite | % by weight | 3-5 |
| Dolomite | % by weight | 3-4 |
| K-Feldspar | % by weight | 1 - 2 |
| Chlorite | % by weight | 1 |

| | | |
|---|---|---|
| **Note:** The characteristics of the waste aggregate fines are likely to vary considerably depending on the underlying geological formations at different aggregate processing facilities. Table 1 relates to one specific sample tested. | | |

**Table 2: Characteristics of Processed Material from Table 1**

| **Parameter** | **Dimensions** | **Typical Value** |
|---|---|---|
| Particle Size | mm | 3-20 |
| Flakiness Index | % | 0 |
| Loose Bulk Density | Mg/m³ | 800 |
| Compacted Bulk Density | Mg/m³ | 860 |
| Mohs Hardness Value | Mohs Scale (0 - 10) | 3 |
| Hydraulic Conductivity | m/s | 3.5 x 10⁻² |
| Hydraulic Conductivity | (m/day) | 3024 |
| Resistance to Fragmentation | Los Angeles Coefficient (%) | 67 |
| Apparent Particle Density | Mg/m³ | 2.45 |
| Particle Density on an Oven-Dried Basis | Mg/m³ | 1.35 |
| Particle Density on a Saturated and Surface-Dried Basis | Mg/m³ | 1.80 |
| Water Absorption | % by weight | 33.30 |
| SiO₂ | % by weight | 46.21 |
| CaO | % by weight | 30.77 |
| Al₂O₃ | % by weight | 6.37 |
| Fe₂O₃ | % by weight | 3.56 |
| MgO | % by weight | 1.73 |
| K₂O | % by weight | 1.64 |
| Na₂O | % by weight | 0.38 |
| TiO₂ | % by weight | 0.34 |
| MnO | % by weight | 0.10 |
| P₂O₅ | % by weight | 0.05 |
| X-Ray Defraction (XRF) Analysis | The processed material is a mixture of silicate minerals (gehlenite-calcium-sodium-magnesium-aluminium-iron-alumino-silicate), quartz, larnite, Wollastonite, Cristobalite and rutile. | |

It is clear from the characteristics in Tables 1 and 2 above that the processing of the raw material in accordance with this invention transforms an essentially impermeable fine grained waste material into a round gravel type material with a greatly enhanced hydraulic conductivity and reduced bulk density.

Furthermore, the processing of the raw material in accordance with this invention transforms the chemical nature of the raw material, and in particular transforms the CaCO₃ component into CaO, with the release of CO₂. It is already well known that CaO, MgO, Al₂O₃ and Fe₂O₃ are effective in removing phosphorus from water and waste water. However, a major disadvantage of the conventional use of these chemicals is that they generate a large quantity of sludge and it is difficult to continually and consistently remove phosphorus to the low concentrations now being required internationally.

Based on the amount of Ca, Mg, Al and Fe in the processed material as presented in Table 2 above, it would be expected that under optimum conditions, the combined phosphorus binding capacity would be in the region of 150 to 170g P/kg of media depending on the availability of reaction sites between the media and the waste water, adequate contact time and the precise nature of the reaction products formed.

We have found that by placing the processed material in a container and allowing water or waste water to simply flow through the processed material, the vast bulk of any dissolved phosphorus in the water or waste water is retained by the processed material. This has the great advantage of not requiring the supply, storage and preparation and dosing of chemicals such as lime or metal salts and an even greater advantage is that no sludge is generated, thereby eliminating the need for sludge storage, treatment and disposal facilities and their associated additional costs.

The processed material is ideally in the form of porous pellets, ranging in size from about 0.5mm to over 30mm in diameter, but more preferably in the range of 1 - 15mm in diameter, depending on the precise requirements in relation to both phosphorus and suspended solids removal. Where larger pellets are generated in the manufacturing process, they can be crushed to the required size if necessary.

The processed material possesses interlinked cavities providing a large surface area, both externally and internally. The method of processing results in the formation of ceramic matrices that gives the material strength and durability but enables the material to retain its porous nature. The form of the material ensures good hydraulic conductivity whilst the porous nature of the material allows contact to be made between the processed material and the liquid in the internal surfaces. The porosity of the processed material is an inherent property of the invention related to the method of preparation and process temperature and retention time, and occurs without the need for other additives, further processing or crushing.

The processed material is ideally made by the following method. Waste fines and silt resulting from the washing and further processing of sand and aggregate or similar material is removed from settlement lagoons, centrifuges, presses or any other dewatering, dust control or other filtering mechanism which exists downstream from aggregate processing, sorting or washing plants. This raw material is dried (where necessary) and formed into pellets. Preferably, the pellets are formed by a rolling process rather than an extrusion process.

The pellets are then fired to a temperature of between 600 and 1200°C. The optimum temperature for this firing process is dependent on individual characteristics of the fines material and can vary depending on the source of the raw material. The processing temperature for each raw material is selected so that it is sufficient for solidification and hardening of the pellets, but is below that at which the outer surface of the pellets becomes dense and glassy, as this will form a barrier against free flow of liquid from the surroundings into the pellet and would typically necessitate the subsequent crushing of the material. In the majority of cases, the ideal temperature for processing occurs between 950°C and 1200°C and more preferably between 1050°C and 1150°C. The processed material has been manufactured in accordance with this invention using batch and continuous processes and using electricity, oil and gas as the heat source. All methods of production resulted in enhanced phosphorus removal compared to the raw material.

Other matrix forming processes which could be adopted to process the raw material, such as lime addition, the addition of fines from the crushing of stone, processing with the addition of a binding agent or any other solidification process, is deemed within the spirit of this invention and may also be utilised to produce a solid pellet from the raw material, which may have similar or the same characteristics as that outlined in this patent.

Once produced, the pellets can be utilised to remove phosphorus or other elements from a waste water stream.

The invention as detailed above is an extremely versatile product and can be used in many ways in water and waste water treatment including:
- use as a filter medium in a passive water or waste water filter,
- as a filter material in a pumped flow through system (with or without recycle),
- as a bedding material in constructed wetland systems (either throughout the entire bed or in sections),
- as a substrate in a percolating trench,
- as a substrate in natural systems with elevated phosphorus levels,
- as a medium in fluidised bed systems or as a powder or fine grained medium which is mechanically or hydraulically mixed with the water or waste water to be treated and subsequently separated.

The invention works by promoting the sorption and/or precipitation of phosphorus as a solid from the liquid waste stream. This phosphorus rich solid material is weakly bonded to the media, and this phosphorus can be released back slowly to water, thereby making it useful as a fertilizer. Any solid material not attached to the media settles quickly (as demonstrated in laboratory tests) and shows very little tendency to re-dissolve into the waste water stream.

The reaction commences immediately on contact between the phosphorus in the water or waste water stream and the processed material, but the efficiency of this process depends on the starting phosphorus concentration, the contact time and the mass of phosphorus already retained by the processed material.

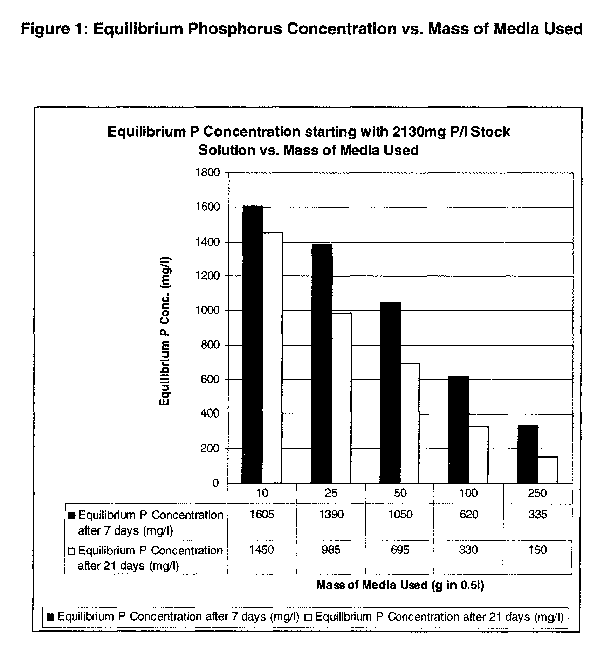

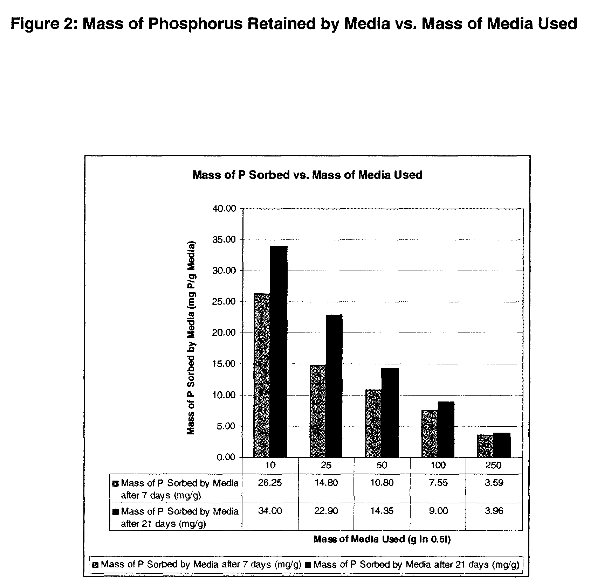

In general, the greater the contact time and the greater the quantity of processed material used, the greater the quantity of phosphorus removed as indicated in Figures 1 and 2.

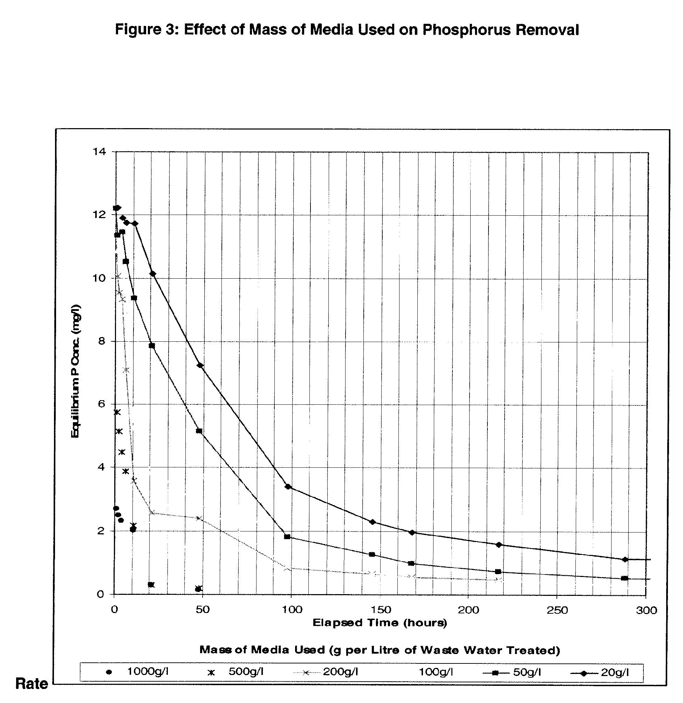

The mass of processed material used relative to the quantity of water or waste water treated has an important bearing on the efficiency of phosphorus removal as indicated in Figure 3. In particular, it is clear from Figure 3 that the greater the quantity of processed material in contact with the waste water to be treated, then the reaction rate is greatly increased with virtually all of the phosphorus removed in a period of 20 hours compared to nearly 300 hours when a smaller mass of processed material is used.

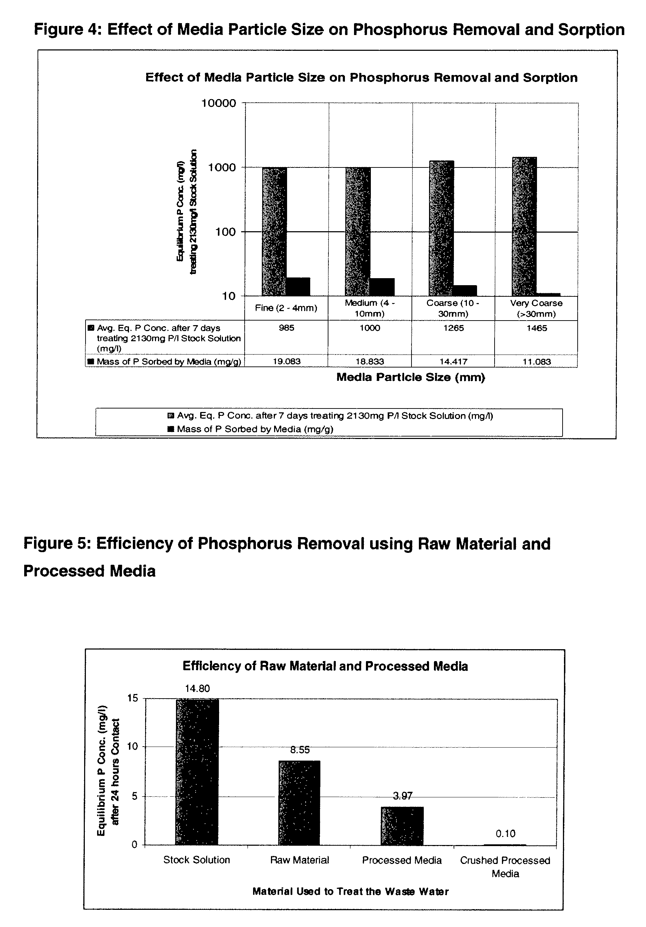

The processed material particle size also has a bearing on the efficiency of the phosphorus removal process as indicated in Figure 4. In general, the smaller the processed material particle size, the greater the efficiency of phosphorus removal and the greater the mass of phosphorus accumulated in the media. However, this factor has to be balanced with the hydraulic conductivity and the benefit of trapping the phosphorus in a solid matrix rather than as a wet sludge.

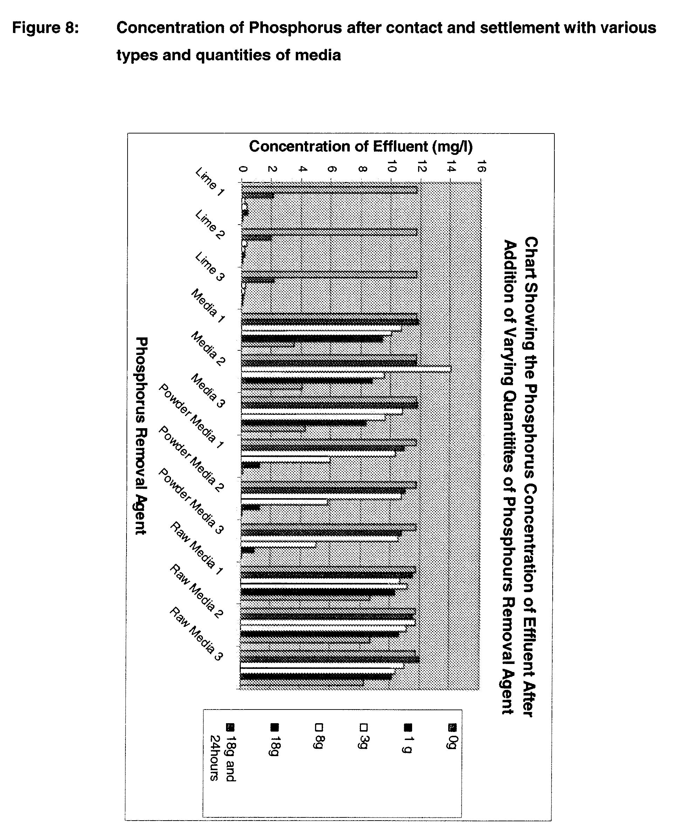

As shown in Example 1 below and Figure 8, the invention is effective using waste fines material from a range of source locations, widely dispersed geographically, with different bedrock types, and with different processing methodologies and grain sizes.

The unprocessed raw material has some capacity to remove phosphorus, but by applying the heat treatment processes described in this invention, the capacity to remove phosphorus is dramatically increased as shown in Figure 5.

The capacity of the processed material to remove phosphorus depends on the initial characteristics of the waste fines and the selection of the most appropriate pelletising and heat processing methods. The theoretical ultimate capacity to remove phosphorus is likely to be in the region of 150 - 200g P/kg of media and saturation tests have revealed the media to have a capacity of 155mg P/g media. This capacity is however dependant on the source material, processing temperature, influent concentration and contact time between the media and the effluent.

Advantageously, the present invention as summarised is a sustainable phosphorus removal system and utilises a waste by-product material generated as a result of mineral processing activity.

The primary use of the invention is the utilisation of the processed material to remove phosphorus from waste water. However, the processed material may also be used for the following end uses:
■ Disinfectant in Waste Water Treatment
   - The high pH of the effluent and the typical retention times used to achieve high levels of phosphorus removal combine to generate a treated waste water with significantly reduced pathogen content.
■ Use of processed material to remove Suspended Solids and Suspended Organic Matter
   - The processed material produced in accordance with this invention can be used to remove residual suspended solids and suspended organic matter from biologically treated effluents. Greater efficiency will be achieved with smaller processed material particle sizes but this has to be balanced with the hydraulic conductivity.
■ Use of processed material for Combined Removal of Phosphorus, Pathogens, Suspended Solids and Suspended Organic Matter
   - The processed material produced in accordance with this invention can be used to remove a range of contaminants in one process step - namely phosphorus, pathogens, suspended solids and suspended organic matter.
■ pH Correction
   - The processed material produced in accordance with this invention can be used as a replacement for lime or other alkaline substances to raise the pH of water and waste water. One notable example is the treatment of Acid Mine Drainage (AMD). One of the main advantages would be the absence of the requirement to store and mix chemical powders such as lime or quicklime, which are very difficult processes to control on a site.
■ Removal of Heavy Metals and other contaminants
   - It is known that many contaminants can be removed from waste water by raising the pH and the use of the processed material produced by this invention can achieve similar results without the problems associated with the use of lime or quicklime.

Table 3 below presents the analysis before and after use of the process treating a secondary (biologically treated) sewage at a full scale waste water treatment plant.

**Table 3: Efficiency of Process treating Biologically Treated Sewage**

| **Parameter** | **Units** | **Influent** | **Effluent** | **% Removal** |
|---|---|---|---|---|
| CBOD (with nitrification inhibition) | mg/l | <2 | <2 | - |
| COD | mg/l | 20 | <10 | >50% |
| Suspended Solids | mg/l | 5 | <2 | >60% |
| Total Nitrogen as N | mg/l | 8.135 | 6.489 | 20.2 |
| Orthophosphate as PO₄-P | mg/l | 1.275 | 0.426 | 66.6 |
| Total Phosphorus as P | mg/l | 1.46 | 0.5 | 65.8 |
| Total coliforms (filtration) | cfu/100ml | 23000 | 910 | 96.0 |
| E coli (filtration) | cfu/100ml | 8200 | 200 | 97.6 |
| Clostridium Perfringens | cfu/100ml | 98 | 4 | 95.9 |

### Examples

### Example 1

A series of tests was carried out to establish if the phosphorus removal capacity of aggregate processing fines is particular to an individual source or is consistent across a range of fines. To conduct these tests, a selection of fines was collected from across Ireland. The source locations were selected to give a wide variety of geographical locations and underlying bedrock type.

This test was designed to qualitatively establish if differing sources of fines all had phosphorus removal properties. The tests did not allow results to be directly compared against each other as the water content of the raw materials were not standardised across the range of samples and neither was the grain size of the material. However, the tests allow firm conclusions to be drawn on the potential of the invention to work, irrespective of the source of the raw material.

To establish if the different samples of fines had phosphorus removal properties, 100g +/- 5g of each sample was added to 200mls of a stock solution with a phosphorus concentration of 1895 mg/l. The samples were left for 8 days and agitated regularly to ensure good contact between the stock solution and the samples of fines.

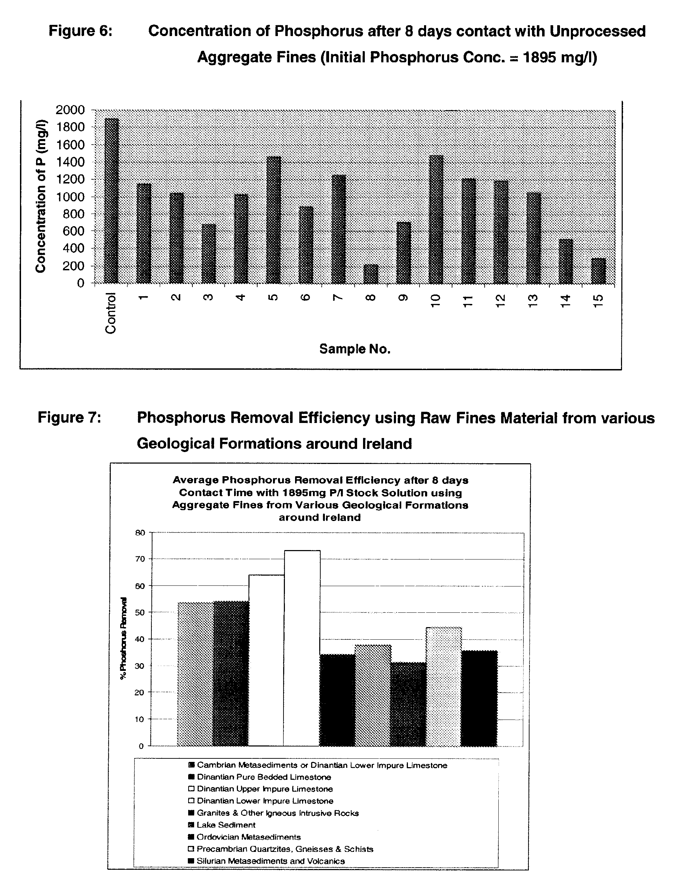

After 8 days contact time, the samples were allowed to settle and the supernatant tested for phosphorus concentration. The reduction in phosphorus concentration between the supernatant and the initial stock solution was presumed to be the quantity of phosphorus removed by the raw fines. The results are presented in Figure 6. They show that whilst there was significant variation between the different source materials, in all cases, contact between the stock solution and the aggregate processing fines resulted in a concentration reduction of phosphorus in the solution.

A number of the sites were located in similar geological formations and Figure 7 presents the average percentage phosphorus removal for each geological formation sampled.

A number of these samples were pelletised and heat treated in accordance with the method outlined in this specification. It was found that in all cases these pellets hardened. Although all source materials hardened during heat treatment, it was found that there was significant variation in the temperature required to produce a utilisable product. This would indicate that each individual source material requires prior investigation to establish the ideal temperature for processing prior to large scale production.

### Example 2

This test was designed to establish if processing improves the ability of the raw material to remove phosphorus. To provide extra detail, lime and powdered processed material were also tested in this example.

The different samples of phosphorus removal agents tested were:
1 Lime
2 Processed (pelletised) material, processed at 1150°C
3 Powdered processed material - prepared by filing down pellets after processing at 1150°C
4 Raw fines - this material was pre-dried at 250°C for 1 hour to ensure 100% dry solid content and then crushed up to powder.

Each media type was added to 1 litre of 14.8mg/l phosphorus stock solution. The media was added in small quantities, shaken and then allowed to settle. 30 minutes after the addition of the media, a phosphorus test was conducted to assess the removal capacity. After a total of 18g of media was added, the samples were then left to settle for 24 hours. After this 24 hour period, the concentration of phosphorus in the stock solution was re-tested.

The phosphorus removal agents were added in the following sequence:1g, 2g (3g total), 5g (8g total), 10g (18g total), 0g (18g total with 24hrs contact time).

Each sample was tested in triplicate. The results of the analysis are presented in Figure 8.

This test demonstrates that all four phosphorus removal agents were effective in lowering the influent concentration of phosphorus. The efficiency of these agents varied considerably, both in the quantity of agent required for efficient phosphorus reduction and the contact time necessary to achieve this reduction. However, it can be seen in Figure 8 that processing as outlined in this specification resulted in significantly improved efficiency of treatment over that demonstrated by the raw material. This improvement in efficiency is seen in both the quantities required to facilitate phosphorus removal and in the contact time necessary for this removal to occur.

In addition, the test demonstrates that media processed into a fine powder can achieve results for phosphorus removal which are commensurate with that obtained using lime. The results using media pellets and raw fines were less efficient than using lime when the test conditions outlined above are followed. However, this test also demonstrates the advantage of using the media produced in accordance with this invention. Where lime is used to remove phosphorus, the phosphorus is contained in a wet (liquid) sludge which is continuously generated and must be separated, stored, thickened, dewatered and disposed of, and this has considerable cost and operational implications. In the case of the application of this invention, the phosphorus is contained in the solid matrix of the media. This has an enormous advantage in full scale plants because it obviates the need to store, mix (and keep mixed) and dose lime which presents considerable difficulty from a cost, health and safety and operational perspective. The media produced and operated in accordance with this invention has an operational life of many years as will be demonstrated in other examples below.

### Example 3

Laboratory testing was conducted to establish the effect of influent phosphorus concentration on the ability of the manufactured media to remove phosphorus from an effluent stream. To conduct this test, a range of differing concentration stock solutions were pumped through columns of media and the phosphorus concentration of the effluent after treatment was measured.

To conduct this test, apparatus was constructed which comprised of 1.5m lengths of 50mm diameter plastic tubing. Each of these tubes was filled with 1.2 litres of media. Different concentrations of phosphorus stock solutions were pumped in to the base of each tube with the effluent collected at the top, thus replicating a typical full-scale waste water treatment plant. Eight different concentrations of phosphorus stock were selected for treatment; 5, 10, 100, 500, 1000, 6500, 10875, 21500 and 38625 mg/l. The pumps were set to a flow rate of approx 1.2 litres per day or 1 day's retention time. In reality, the average flow rate throughout the duration of the test varied from 1.05 to 1.15 litres per day. The test was run for a period of approximately 40 days, although not all concentrations of stock were analysed for this entire duration.

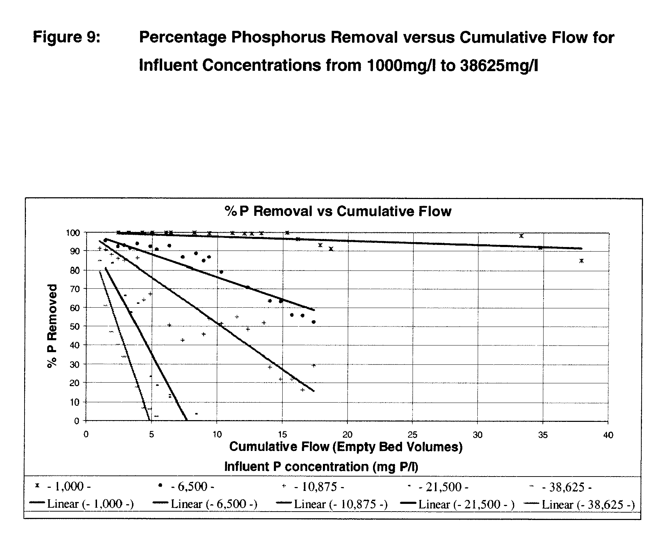

The results of this analysis are presented in Figures 9 - 12.

These tests confirmed that the invention as detailed in this specification has the capacity to remove phosphorus from influents with a vast range of phosphorus concentrations, from the very low strength (5mg/l) to the very high strength (38,625mg/l).

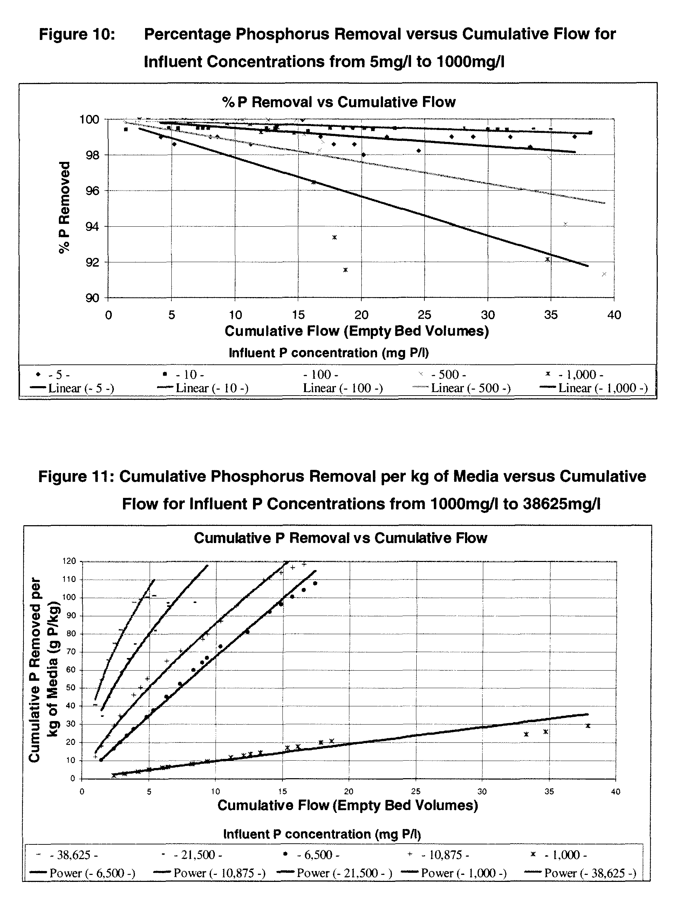

Figure 11 shows that the media manufactured in accordance with this invention retained in the region of 100 to 120g P/kg of media when waste water with high concentrations of phosphorus is treated. It should be noted that there was still a substantial additional binding capacity remaining in the columns treating the 6500 and 10875mg P/l.

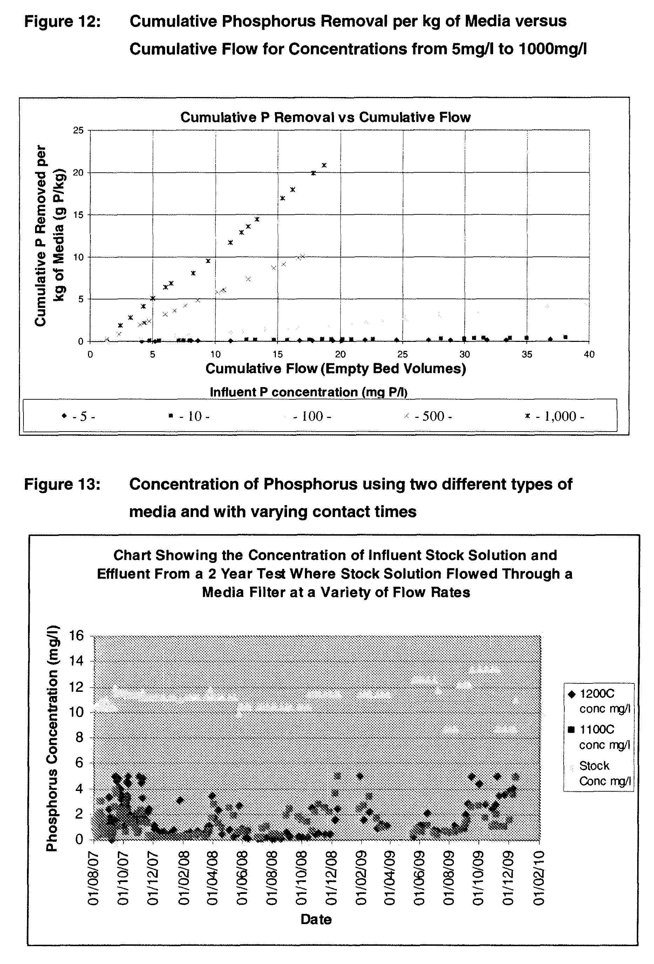

Figure 12 shows that when treating waste water with relatively low concentrations of phosphorus, only a fraction of the ultimate phosphorus binding capacity of the media was used with the number of bed volumes treated. Using the lower figure of the phosphorus binding capacity of 100g P/I from Fig. 11, the data suggests that at an hydraulic loading rate of 1 empty bed volume (EBV) per day treating a waste water with a phosphorus concentration of 10mg/l and producing an average treated waste water phosphorus concentration of 1mg/l, the media could treat a total volume in excess of 11,000 EBVs. This is equivalent to an effective lifespan of about 30 years.

### Example 4

This test was designed to assess the ability of the media to remove phosphorus from an effluent over an extended period of time. The test was designed to mimic conditions and phosphorus concentrations that would be expected at a waste water treatment plant.

A laboratory scale pilot plant was constructed consisting of two 100mm diameter pipes with a bottom inlet and top outlet. Each pipe was filled with 4 litres of media, one having been heat treated to 1100°C and the other heat treated to 1200°C. A variable speed peristaltic pump was used to dose the media from the base of the apparatus with a phosphorus stock solution that had an approximate concentration of 10mg/l, although this concentration varied between 8 and 14mg/l throughout the test period. The treated effluent was discharged from the top of the apparatus via the outlet and was collected in a container as a composite sample. This composite sample was then tested to monitor the concentration of phosphorus remaining in the waste water.

Prior to the media being inserted into the apparatus, a void space calculation was conducted on the media. This test showed that the approximate void space was 1600mls in 4 litres of media, or approximately 40% of the total bed volume.

This test was designed to assess the efficiency of the media over an extended period of time. The test also assessed the phosphorus removal capability of the media over a variety of flow rate conditions and therefore, retention times. This test was not designed to optimise the process.

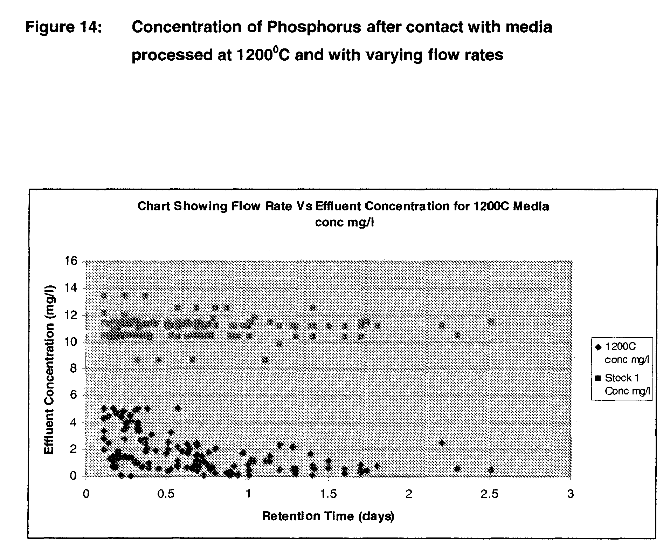

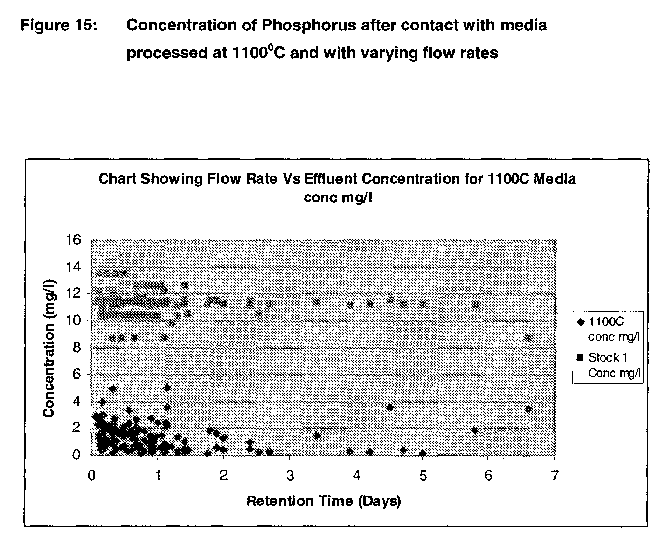

Figures 13 - 15 clearly demonstrate the ability of the media to continue to remove phosphorus over the duration of the test (2.5 years).

### Example 5

This test was designed to establish the rate of reaction in removal of phosphorus.

To conduct the test, 100g of media pellets processed at 1150°C were added to 500mls of varying strength stock solutions; 1mg/l, 10mg/l, 2000mg/l and 10,000mg/l in a laboratory pot test. The phosphorus concentration of the solution was monitored at regular time intervals.

The results of this analysis showed that when media pellets are exposed to liquid containing phosphorus, removal of phosphorus commences immediately with the fastest rate of reaction during the first 24 hours of contact. After this initial 24 hour period, removal of phosphorus continues but at a slower rate.

Not all the factors affecting removal rate of phosphorus and the final effluent concentration are fully understood but it is known that the time at which the media pellets cease removing phosphorus and the concentration of phosphorus in the waste stream at the end point is dependant on numerous factors, but particularly on initial phosphorus concentration, previous exposure of the media to phosphorus (age) and contact time.

### Example 6

This test was designed to establish the ultimate capacity of the media or the point at which the media is no longer able to remove further phosphorus when exposed to a fresh stock solution. To conduct this test, very high strength phosphorus stock solution was treated in a batch process by exposure to media until the media no longer removed significant quantities of phosphorus from the solution. Very high strength stock was used as previous tests using 2,000mg/l P solution and 10,000mg/l P solution failed to reach an end point where the media could no longer remove phosphorus from the influent stock solution.

In this test, 100g of media was added to 200mls of stock solution with a phosphorus concentration of 52,800mg/l. Contact between the stock solution and the media was maintained until the rate of removal was low. The stock solution was then poured off, filtered and analysed for remaining phosphorus. The media was retained, added to fresh stock solution and again left for sufficient time to allow any removal reaction to continue to completion. This test was repeated until the concentration of phosphorus in fresh stock was not reduced after exposure to the media.

**Table 4: Ultimate Capacity of the Media to Retain Phosphorus**

| | **Initial Phosphorus Concentration (mg/l)** | **Final Phosphorus Concentration (mg/l)** | **P removed from solution (mg P/I)** | **Mass of P removed from 0.21 of solution (mg P)** | **Mass of P removed per g of media (mg P/g)** |
|---|---|---|---|---|---|
| Stock Solution | 52,800 | 52,800 | 0 | - | - |
| Initial Dosing | 52,800 | 17,200 | 35,600 | 7,120 | 71.2 |
| 1^{st} Repeat Dosing | 52,800 | 31,600 | 21,200 | 4,240 | 42.4 |
| 2^{nd} Repeat Dosing | 52,800 | 32,000 | 20,800 | 4,160 | 41.6 |
| 3^{rd} Repeat Dosing | 52,800 | 52,800 | 0 | 0 | 0 |
| **Total P removal** | | **-** | **-** | **15,520** | **155.2** |

### Example 7

To further assess the heat treatment process as described in this specification, a test was conducted using 3 different firing techniques.
1. Continuous - rotary kiln - processing media at 1150ºC for 7 minutes in the hot zone
2. Batch - small top loading kiln (total capacity 12L)
3. Batch - large front loading kiln (total capacity 120L)

These samples were tested for their ability to remove phosphorus from waste water in a batch process, whereby 200mls of approximately 2,000mg P/I stock solution was added to 100g of each media type. The media was left in contact with the solution for 7 days to ensure maximum removal.

**Table 5: Effect of Method of Production on Phosphorus Removal Capability**

| **Method Used to Produce the Media** | **Initial Phosphorus Concentration in Waste Water (mg/l)** | **Final Phosphorus Concentration in Waste Water (mg/l)** | **% P Removed** | **P Retained by Media after treating 0.2L of Waste Water (mg P/g media)** |
|---|---|---|---|---|
| Rotary Kiln using Oil | 1920 | 0.09 | 99.99% | 3.84 |
| Small Capacity Kiln Batch Bake using Electricity | 1920 | 260 | 86.46% | 3.32 |
| Large Capacity Kiln Batch Bake using Gas | 1920 | 0.46 | 99.98% | 3.84 |

Both the samples from the large capacity kiln and the rotary kiln produced results in excess of that previously seen in other tests and were able to remove 99.98% and 99.99% respectively from the available phosphorus in this high strength effluent.

The reduced removal efficiency exhibited by the media processed using the small batch kiln is presumed to relate to the fact that this kiln was essentially "closed" whereas the other two larger kilns were open to the atmosphere, thereby allowing a more oxygenated firing process in the larger kilns.

The results of 3.32 - 3.84 mg P removed per g media are not representative of the ultimate sorption capacity of the media as previous tests have shown that adding fresh stock solution to the media results in ongoing additional P removal.

The invention is not limited to the embodiments hereinbefore described which may be varied in construction and detail within the scope of the appended claims.

## Claims

1. A method for the processing of fines materials generated as a by-product from the screening and washing of sand and gravel comprising the steps of drying, pelletising and firing the fines material to produce a ceramic material in the form of pellets with enhanced phosphorus removal properties.

2. The method of claim 1 wherein the ceramic material pellets have enhanced hydraulic conductivity and reduced bulk density compared to the fines materials.

3. The method of claim 1 or claim 2 wherein the pellets have a diameter of 0.5mm to 30mm.

4. The method of any of the preceding claims wherein the ceramic material has the following physical and chemical properties
| **Parameter** | **Typical Value** |
|---|---|
| Average Particle Size | 0.5 - 20 mm |
| Loose Bulk Density | 700 - 1200 Mg/m² |
| Hydraulic Conductivity | 3 - 5 x 10⁻² m/s |
| Water Absorption | 30 - 50% by weight |
| SiO₂ | 20 - 60% by weight |
| CaO | 25 - 75% by weight |
| Al₂O₃ | 1 - 20 % by weight |
| Fe₂O₃ | 1 - 20 % by weight |

5. The method of any of the preceding claims wherein the firing step takes place at a temperature of between 600°C - 1200°C, preferably between 1000°C and 1200°C, more preferably between 1050°C and 1150°C.

6. The method of any of claims 1 to 5 wherein the pellets remove phosphorus from water to an order of approximately 150 - 200g P/kg of ceramic material.

7. The method of any of the preceding claims wherein the pellets are solid and retain their shape and durability when submerged for long periods in water.

8. A method of removing phosphorus from water comprising contacting the water to be treated with the pellets produced according to any of claims 1 to 7 to remove phosphorus from the water to the order of approximately 150 - 200g P/kg of pellets.

9. The method of claim 8 wherein the pellets are placed in a container and the water to be treated flows through the pellets in the container in an upflow, downflow and/or horizontal flow mode.

10. The method according to claim 9 wherein the pellets are held in suspension by the flow of liquid in the container or by a mixing process to allow sufficient contact time between the ceramic material pellets and the water to remove the phosphorus from the water.

11. The method according to any of claims 8 to 10 wherein the phosphorus is retained by the pellets and does not re-dissolve back into the water.

12. A method for recycling phosphorous contained within the pellets produced according to any of claims 8 to 11, wherein the retained phosphorus is recovered as a liquid by flushing with water that does not contain phosphorus or by other means or as a solid fertilizer, soil conditioner or source of recovered or recycled phosphorus for commercial or industrial use.

13. A method for the combined removal of one or more of phosphorus, suspended solids, suspended organic matter, ammonia and pathogens from water comprising the use of the pellets produced by the method of any of claims 1 to 7.

14. A method for the neutralisation of acidic wastes, such as acid mine drainage, comprising the use of the pellets produced by the method of any of claims 1 to 7.

15. A method for pH correction in water and waste water treatment comprising the use of the pellets produced by the method of any of claims 1 to 7.
